# EUROPEAN PATENT APPLICATION

(11) **EP 4 783 094 A1**
(43) Date of publication of application: **29.07.2026**
(21) Application number: 25222979.4
(22) Date of filing: 12.12.2025
(51) Int. Cl.: G06Q 20/20, G06Q 20/40

(54) **SYSTEM, METHOD, AND STORAGE MEDIUM**

(30) Priority: 22.01.2025 JP 2025009070
(71) Applicant: Toshiba TEC Kabushiki Kaisha, Tokyo 141-8562 (JP)
(72) Inventor: Sasaki, Yuta, Tokyo, 141-8562 (JP)
(74) Representative: Bandpay & Greuter

(57) **Abstract**

A system includes a POS terminal, a sensing device, an information terminal, and a management terminal. The sensing device captures image data of a customer performing an item registration process and a payment process at the POS terminal, The information terminal performs a fraud detection process that includes acquiring the image data from the sensing device, changing a threshold from an initial threshold value in response to detection of a threshold change event during the item registration process or the payment process, detecting specific behavior of the customer from the image data by using an image recognition technique, incrementing a fraud score each time the specific behavior of the customer is detected, determining that the customer has performed a fraudulent activity when the fraud score exceeds the threshold, and transmitting a notification indicating the fraudulent activity to at least one of the POS terminal and the management terminal.

## Description

### FIELD

Embodiments described herein relate generally to a system, a method, and a storage medium.

### BACKGROUND

In recent years, self-checkouts have been widely used. Self-checkouts enable customers, who are going to purchase items in a store, to register and make payment for the items by themselves. While the introduction of self-checkouts may alleviate the shortage of manpower and reduce labor costs, there is a risk that customers underpay as a result of intentionally or unintentionally failing to register some items or perform a fraudulent exit without payment.

In general, in a store in which self-checkouts are introduced, store clerks, called attendants, are assigned to support customers using the self-checkouts. However, because each store clerk is assigned to multiple self-checkouts, it is not realistic for the store clerk to monitor the activity of every customer all the time. In addition, if the store clerk directly asks a customer whether the customer is committing fraud, the customer may feel uncomfortable and may complain. For the above reasons, there are technologies in which activities of customers are captured with a camera and fraud is detected using image recognition techniques. For example, in fraud detection using image recognition techniques, a threshold is set as a determination criterion, and it is determined that fraud is detected when the threshold is exceeded.

However, when the same threshold is used for all customers, it is not possible to properly perform fraud detection considering the demeanors of customers during self-checkout operations.

### SUMMARY OF THE INVENTION

Embodiments of the present invention provide a system, a method, and a storage medium according to appended claims that make it possible to detect fraud based on a criterion that is appropriate for each customer.

According to an aspect of this disclosure, a system includes a point of sale (POS) terminal, a sensing device, an information terminal, and a management terminal that are connected to each other for communication. The sensing device is configured to capture image data of a customer performing an item registration process and a payment process in a transaction at the POS terminal. The information terminal is configured to perform a fraud detection process that includes acquiring the image data from the sensing device, changing a threshold for fraud detection from an initial threshold value to a value smaller or greater than the initial threshold value in response to detection of a threshold change event during the item registration process or the payment process, detecting specific behavior of the customer from the image data by using an image recognition technique, incrementing a fraud score each time the specific behavior of the customer is detected, determining that the customer has performed a fraudulent activity when the fraud score exceeds the threshold, and transmitting a notification indicating that the customer has performed the fraudulent activity to at least one of the POS terminal and the management terminal.

The method according to the present invention may comprise
generating, by the information terminal, display data including an identifier of the POS terminal and the threshold used for the fraud detection process for the POS terminal; and
transmitting, by the information terminal, the display data to the management terminal.

The method according to the present invention may comprise
alerting the customer by the POS terminal upon receipt of the notification.

The method according to the present invention may comprise displaying, by the management terminal, information indicating the POS terminal at which the fraudulent activity has been detected upon receipt of the notification.

The method according to the present invention may comprise transmitting, by the POS terminal, a POS event indicating a start or an end of the item registration process or a start or an end of the payment process to the information terminal, wherein
the fraud detection process is started by the information terminal upon receipt of the POS event indicating the start of the item registration process.

Preferably, according to the method,
the fraud detection process is ended by the information terminal upon receipt of the POS event indicating the end of the payment process.

### BRIEF DESCRIPTION OF THE DRAWINGS

FIG. 1 is a diagram illustrating a configuration of a fraud detection system according to an embodiment.
FIG. 2 is a diagram illustrating a hardware configuration of a POS terminal according to the embodiment.
FIG. 3 is a diagram illustrating a functional configuration of the POS terminal.
FIG. 4 is a diagram illustrating a functional configuration of an edge device according to the embodiment.
FIG. 5 is a diagram illustrating an example of display data.
FIG. 6 is a flowchart illustrating a fraud detection process according to the embodiment.

### DETAILED DESCRIPTION

Hereinafter, embodiments will be described in detail with reference to the drawings. The present disclosure is not limited to the embodiments described below.

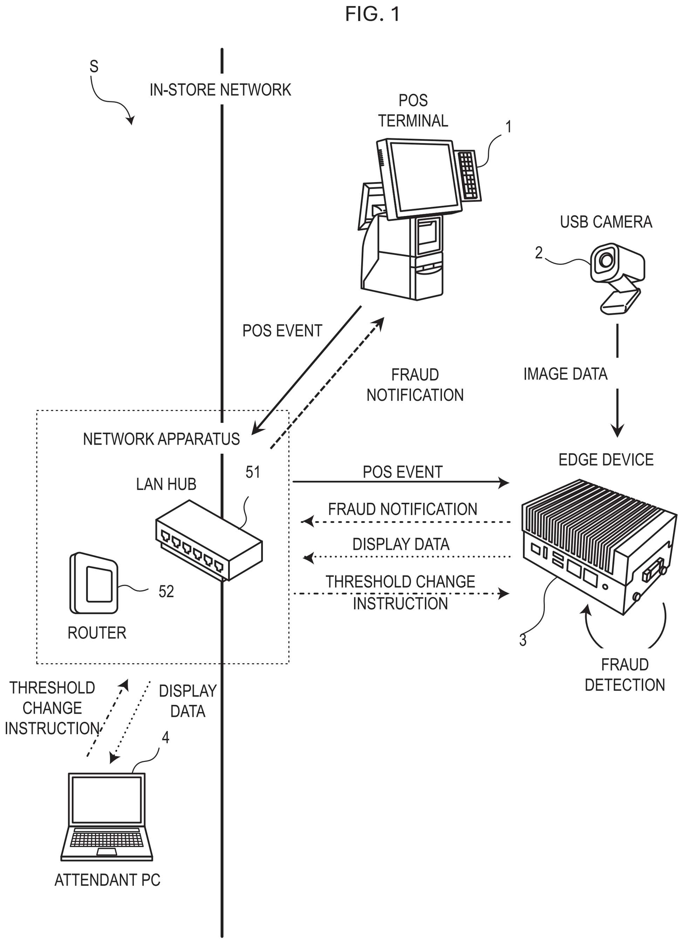

FIG. 1 is a diagram illustrating a configuration of a fraud detection system S according to an embodiment. The fraud detection system S is provided in, for example, a store such as a supermarket, a drug store, or a convenience store.

As illustrated in FIG. 1, for example, the fraud detection system S includes a point of sale (POS) terminal 1, a camera 2, an edge device 3, and an attendant personal computer (PC) 4. The POS terminal 1, the edge device 3, and the attendant PC 4 are connected to each other via network devices, such as a local area network (LAN) hub 51 and a router 52, over an in-store network N so as to be able to communicate with each other. In FIG. 1, the fraud detection system S includes one POS terminal 1. However, the fraud detection system S may include a plurality of POS terminals 1. Although not shown in FIG. 1, a store server or the like may be further connected to the in-store network N.

The POS terminal 1 is a self-checkout with which a customer performs an item registration process and a payment process.

The camera 2 is, for example, a USB (Universal Serial Bus) camera installed near the POS terminal 1 or attached to the POS terminal 1. The camera 2 is connected to the edge device 3 for communication. The camera 2 may be connected via the in-store network N to the edge device 3. The camera 2 captures image data of a customer performing an item registration process and a payment process in a transaction at the POS terminal 1 and transmits the image data to the edge device 3. The image data may be a video or multiple still images captured over time. The camera 2 is an example of a sensing device in the present embodiment.

For example, one camera 2 is provided for each POS terminal 1. Alternatively, one camera 2 may be configured to simultaneously capture customers at multiple POS terminals 1. A security camera installed on the ceiling of the store may also be used as the camera 2.

The edge device 3 performs image recognition on image data acquired from the camera 2 to detect fraud committed by the customer operating the POS terminal 1. The edge device 3 is an edge computer including a processor, such as a central processing unit (CPU) or a graphics processing unit (GPU), a memory, an artificial intelligence (AI) accelerator, and the like. The edge device 3 is an example of an information terminal in the present embodiment.

For example, the edge device 3 recognizes processing states of the POS terminal 1 by acquiring POS events from the POS terminal 1 via the in-store network N. Each POS event is information indicating the start or the end of a process performed by or using the POS terminal 1. For example, POS events indicate the start of an item registration process, the end of the item registration process, the start of a payment process, and the end of the payment process.

The edge device 3 performs a fraud detection process while the POS terminal 1 is performing an item registration process or a payment process. In the fraud detection process, the edge device 3 determines that the customer has performed a fraudulent activity when a value calculated based on the behavior of the customer recorded in the image data acquired from the camera 2 exceeds a threshold for detecting a fraudulent activity. Determining, by the edge device 3, that "the customer has performed a fraudulent activity" is also referred to as "detecting fraud".

The threshold used for fraud detection by the edge device 3 is an example of a detection threshold in the present embodiment. The threshold used for fraud detection by the edge device 3 can be changed by an instruction from the attendant PC 4. More specifically, the threshold used for fraud detection by the edge device 3 is normally set to a predetermined initial threshold value and can be changed to a value smaller than the initial threshold value when an instruction to change the threshold is received from the attendant PC 4. As the threshold decreases, the edge device 3 is more likely to determine that the behavior of a customer is "fraudulent". On the other hand, as the threshold increases, the edge device 3 is less likely to determine that the behavior of a customer is "fraudulent". In other words, the fraud detection sensitivity level increases as the threshold decreases.

Note that thresholds used for fraud detection by the edge device 3 includes at least two values, namely, an "initial threshold value" and a "value smaller than the initial threshold value (or a value for a higher fraud detection sensitivity level)". Also, multiple "values smaller than the initial threshold value (or values for higher fraud detection sensitivity levels)" may be used.

The attendant PC 4 is an example of a management terminal used by an employee, such as a store clerk of a store (hereinafter, a user of the attendant PC 4 is referred to as a store clerk), to manage the POS terminal 1. When a plurality of POS terminals 1 are included in the fraud detection system S, the attendant PC 4 centrally manages the plurality of POS terminals 1. Also, a plurality of attendant PCs 4 having the same function may be included in the fraud detection system S.

The attendant PC 4 is configured as a normal PC including a processor, such as a CPU, a memory, a display, an input device, and the like. The input device may include, for example, a keyboard, a mouse, and/or a touch panel. Instead of the attendant PC 4, for example, a tablet computer may be used as the management terminal.

When, for example, a store clerk monitoring a customer operating the POS terminal 1 anticipates that the customer is likely to commit fraud based on the demeanor of the customer, the store clerk operates the attendant PC 4 to change the threshold used for fraud detection by the edge device 3. After the threshold is changed, the edge device 3 determines whether fraud is committed by using the changed threshold. In other words, while an item registration process or a payment process is being performed by the customer at the POS terminal 1, the store clerk can change the criterion for fraud detection in real time by operating the attendant PC 4.

The attendant PC 4 displays, on a display, display data in which an identifier, such as the name, number, or code, of each POS terminal 1 and the threshold used for fraud detection for the POS terminal 1 are associated with each other. Thus, the store clerk can easily identify the threshold set for each POS terminal 1 by using the attendant PC 4. The display data will be described in detail later.

A screen for displaying the threshold set for each POS terminal 1 may also serve as an operation screen for changing the threshold. In this case, the user may select a POS terminal 1 on the screen and perform an operation of changing the threshold for the selected POS terminal 1.

As described above, the thresholds used for fraud detection by the edge device 3 may include the initial threshold value and multiple "values smaller than the initial threshold value (or values for higher fraud detection sensitivity levels)". Therefore, the store clerk may select one of the thresholds according to the likelihood of fraud anticipated based on the demeanor of the customer.

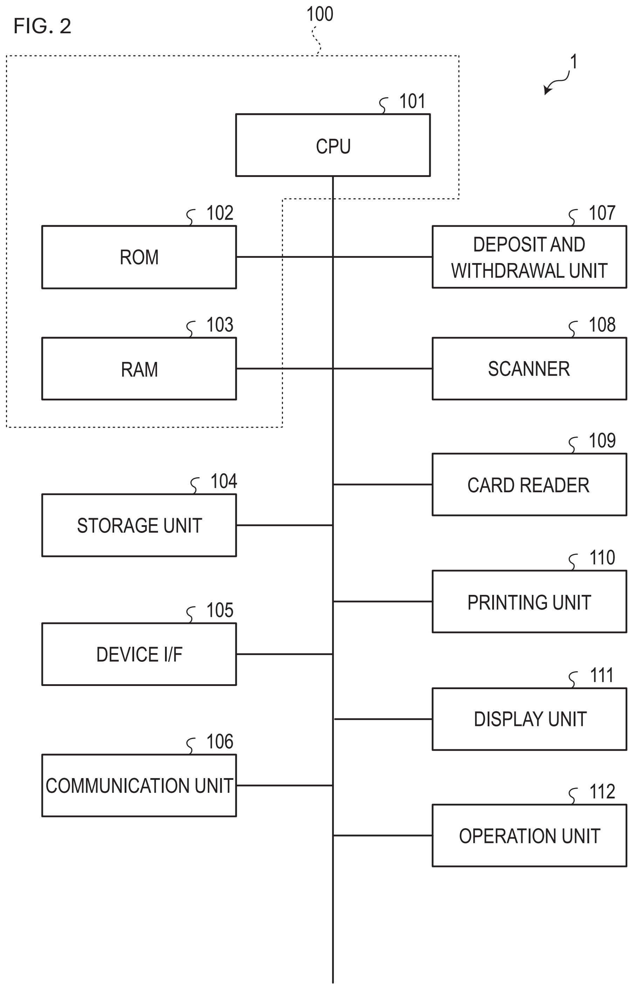

Here, a configuration of the POS terminal 1 according to the present embodiment will be described. FIG. 2 is a diagram illustrating an example of a hardware configuration of the POS terminal 1 according to the present embodiment.

As shown in FIG. 2, the POS terminal 1 includes a CPU 101, a ROM (Read Only Memory) 102, a RAM (Random Access Memory) 103, a storage unit 104, a device I/F (interface) 105, a communication unit 106, a deposit and withdrawal unit 107, a scanner 108, a card reader 109, a printing unit 110, a display unit 111, an operation unit 112, and the like.

The CPU 101 is an example of a processor and controls other units of the POS terminal 1. The CPU 101 is connected to each of the hardware components illustrated in FIG. 2 via a bus or the like. The ROM 102 stores various programs. The RAM 103 is a workspace into which programs and various types of data are loaded. Here, the CPU 101, the ROM 102, and the RAM 103 constitute a control unit 100, which is an example of a computer.

The storage unit 104 is a storage medium, such as a hard disk drive (HDD) or a flash memory, and retains stored data even when the power is turned off. The storage unit 104 stores various programs that can be executed by the CPU 101, various types of setting information, and the like.

The storage unit 104 also stores an item master and an item registration file. The item master is a master file that stores item information, such as item names and prices of items to be sold. The item registration file stores registered item information (item names, prices, and the like of registered items) in association with a transaction code for identifying a single transaction. The item master is referred to by a program in an item registration process. The item registration file is generated by the item registration process.

The device I/F 105 connects a device to the POS terminal 1 in a wired or wireless manner to enable communication with the device. For example, the device I/F 105 may be connected to an electronic money reader/writer for electronic money payment by the customer. The electronic money reader/writer may be included in the POS terminal 1.

The communication unit 106 is a communication interface that connects the POS terminal 1 to a network, such as the in-store network N. The communication unit 106 may support either wired connection or wireless connection. The communication unit 106 communicates with external devices, such as a store server, the attendant PC 4, and an electronic payment server that provides an electronic payment service, via a network.

The deposit and withdrawal unit 107 receives cash from the customer and dispenses change to the customer under the control of the control unit 100.

The scanner 108 is an imaging device, such as a charge coupled device (CCD) camera. The scanner 108 captures an image of an item (or scans the item). The scanner 108 captures an image of an item through a reading window provided in the housing of the POS terminal 1 and reads a code symbol, such as a barcode or a two dimensional code, attached to the item. The scanner 108 may also capture an image for image recognition of the item. The scanner 108 is also referred to as a reading device. The POS terminal 1 may include a reading device, such as a handy scanner, capable of reading a code symbol attached to an item in addition to or instead of the scanner 108.

The scanner 108 may also read a two dimensional code, such as a QR code (registered trademark), displayed on, for example, a display of a smartphone of a customer for payment using the two dimensional code.

The card reader 109 is a reading device that reads information stored in a card medium. The card reader 109 reads information from a card medium inserted into a card insertion slot provided in the housing of the POS terminal 1. The card reader 109 may also support contact reading. In this case, the card reader 109 reads information from a card medium that is brought into contact with the card reader 109.

The printing unit 110 is a printing device, such as a thermal printer. The printing unit 110 prints a receipt related to items purchased by the customer and discharges (or issues) the printed receipt from a receipt issuing port provided in the housing of the POS terminal 1.

The display unit 111 is implemented by a display device, such as a liquid crystal display (LCD), and displays various types of information and images under the control of the control unit 100.

The operation unit 112 receives various operations performed by the customer. The operation unit 112 is, for example, a touch panel disposed to overlap the display unit 111. The operation unit 112 outputs, to the control unit 100, information corresponding to a position on the operation unit 112 touched by the customer. The operation unit 112 may also be a keyboard or physical buttons.

The POS terminal 1 does not have to include all the components shown in FIG. 2, and some of the components shown in FIG. 2 may be the functions of an external device connected to the POS terminal 1. The POS terminal 1 may further include a speaker capable of outputting sound, a light emitting diode (LED) lamp disposed outside the main body of the POS terminal 1, and the like.

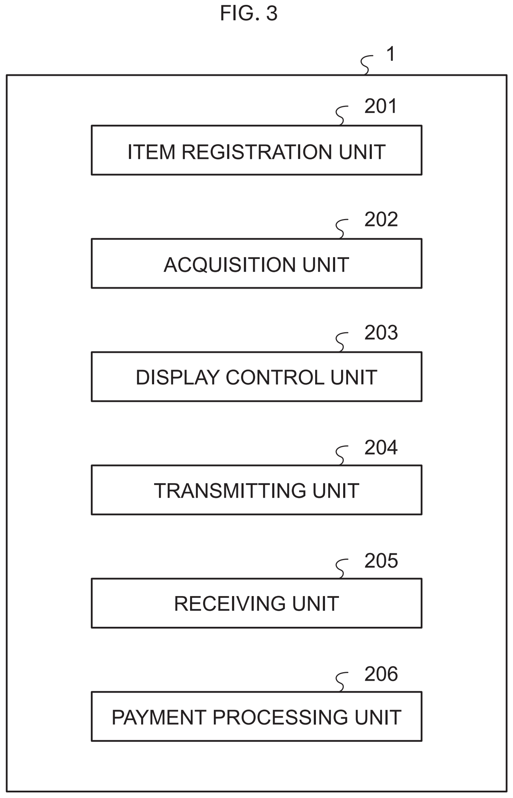

Next, a functional configuration of the POS terminal 1 will be described with reference to FIG. 3.

FIG. 3 is a diagram illustrating a functional configuration of the POS terminal 1 according to the present embodiment. As shown in FIG. 3, the POS terminal 1 includes an item registration unit 201, an acquisition unit 202, a display control unit 203, a transmitting unit 204, a receiving unit 205, and a payment processing unit 206 as functional units.

The item registration unit 201 registers an item to be purchased by the customer. More specifically, the item registration unit 201 identifies the item code of the item by recognizing a code symbol attached to the item from an image of the item acquired from the scanner 108 and by decoding the code symbol. Alternatively, the item registration unit 201 may identify the item code by performing image recognition of the item itself. Also, the item registration unit 201 may receive the item code via the operation unit 112. The item registration unit 201 searches the item master for the identified item code and acquires item information corresponding to the item code from the item master. The item registration unit 201 registers the item information of the item to be purchased by the customer in the item registration file.

The acquisition unit 202 acquires, from the edge device 3, a fraud notification indicating that fraud by a customer has been detected.

The display control unit 203 controls the display unit 111 to display various screens. For example, the display control unit 203 causes the display unit 111 to display an item registration screen operated by the customer during the item registration process and a payment screen operated by the customer during the payment process.

In addition, when the acquisition unit 202 acquires a fraud notification from the edge device 3, the display control unit 203 causes the display unit 111 to display a message or information for alerting or warning the customer.

The transmitting unit 204 transmits POS events to the edge device 3 according to the phases of various processes performed by the POS terminal 1.

The receiving unit 205 receives an operation performed by the customer via the operation unit 112. For example, the receiving unit 205 receives an operation to start an item registration process, an operation to start a payment process, an operation to select a payment method in the payment process, and the like performed by the customer.

The payment processing unit 206 performs a payment process for the payment of registered items. For example, the payment processing unit 206 receives payment from the customer according to a payment method selected by the customer on the payment screen.

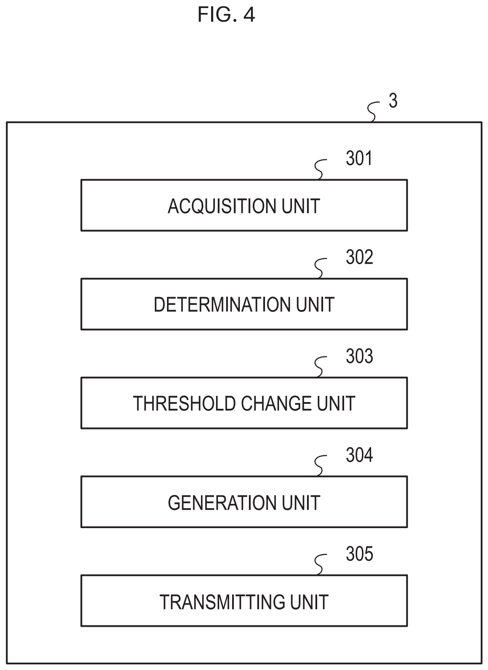

Next, a functional configuration of the edge device 3 will be described with reference to FIG. 4. FIG. 4 is a diagram illustrating a functional configuration of the edge device 3 according to the present embodiment. As shown in FIG. 4, the edge device 3 includes an acquisition unit 301, a determination unit 302, a threshold change unit 303, a generation unit 304, and a transmitting unit 305.

The acquisition unit 301 acquires, from the camera 2, image data (or a video) obtained by capturing the customer while the customer is performing an item registration process or a payment process at the POS terminal 1. The acquisition unit 301 is an example of an image acquisition unit according to the present embodiment.

Also, the acquisition unit 301 acquires a POS event transmitted from the POS terminal 1. Furthermore, the acquisition unit 301 acquires an instruction to change the threshold transmitted from the attendant PC 4.

The determination unit 302 determines that the customer has performed a fraudulent activity when a value calculated based on specific behavior of the customer recorded in the image data acquired by the acquisition unit 301 exceeds the threshold. The determination unit 302 is an example of a fraudulent activity detection unit according to the present embodiment.

For example, the determination unit 302 detects a hand of the customer and an object (such as an item) held in the hand of the customer from the image data. The determination unit 302 tracks the movement of the detected hand and object and thereby detects an activity in which the customer takes out the item from a shopping basket and stores the item in a plastic bag or a reusable bag. The determination unit 302 performs image recognition to detect specific behavior of the customer from the image data. The specific behavior of the customer is behavior that indicates potential fraud. The behavior indicating potential fraud is, for example, an act of moving an item from a shopping basket to a plastic bag or a reusable bag without holding the item over the scanner 108, an act of not holding some of the same items over the scanner 108, an act of the customer moving away from the POS terminal 1 by a specified distance and for a specified time or more before the completion of payment in the payment process, an act of reattaching a discount seal attached to an item to another item, or the like. Also, an act of moving a hand back and forth between a shopping basket and a bag of the customer may be detected as specific behavior.

The determination unit 302 increments a value indicating the likelihood of fraud each time specific behavior of the customer is detected from the image data. This value is hereafter referred to as a fraud score. The determination unit 302 determines that the customer has performed a fraudulent activity when the incremented fraud score exceeds the threshold during one transaction.

The increment of the fraud score may vary depending on the types of specific behavior. In other words, the edge device 3 may be configured to increment the fraud score by an amount predetermined for each type of specific behavior. For example, since an act of moving a hand back and forth between the shopping basket and the bag of the customer does not immediately indicate fraudulent behavior, the increment of the fraud score may be set to a small value so that at least the initial threshold value is not exceeded even when the act is performed once. However, even if the increment is small, it is determined that a fraudulent activity has been performed when the act is repeated multiple times and the fraud score exceeds the threshold.

On the other hand, an act of the customer moving away from the POS terminal 1 by a specified distance and for a specified time or more before the completion of payment in the payment process strongly suggests unpaid departure. When an activity strongly suggesting fraud is performed even once, the fraud score may exceed the initial threshold value.

Even when specific behavior cannot be clearly detected from the image data, the determination unit 302 may increment the fraud score based on the probability that the detected behavior is specific behavior. Note that the method of detecting specific behavior of a customer from image data through image recognition and the method of obtaining a fraud score are not limited to the above-described examples, and any known methods may be used. The determination unit 302 may detect specific behavior of a customer and calculate a fraud score by using a known trained model in machine learning.

The determination unit 302 performs the fraud detection process in accordance with a POS event transmitted from the POS terminal 1. For example, the determination unit 302 starts the fraud detection process when the acquisition unit 301 acquires a POS event indicating the start of an item registration process from the POS terminal 1 and ends the fraud detection process when the acquisition unit 210 acquires a POS event indicating the end of a payment process from the POS terminal 1. Since the item registration process and the payment process for one transaction are continuously performed at the POS terminal 1, even when the acquisition unit 301 acquires a POS event indicating the end of the item registration process and a POS event indicating the start of the payment process, the determination unit 302 continues the fraud detection process.

The threshold change unit 303 changes the threshold used for fraud detection from the initial threshold value during the item registration process or the payment process performed by the POS terminal 1. More specifically, the threshold change unit 303 changes the threshold used for fraud detection for a specified POS terminal 1 based on operations performed by the user to specify the POS terminal 1 and change the threshold during the item registration process or the payment process performed by the POS terminal 1. The user is, for example, a store clerk who operates the attendant PC 4. When the acquisition unit 301 acquires an instruction to change the threshold transmitted from the attendant PC 4, the threshold change unit 303 changes the threshold based on the instruction. When the fraud detection system S includes a plurality of POS terminals 1, different thresholds may be set for the POS terminals 1. In this case, a storage unit, such as a memory, of the edge device 3 stores the thresholds used for the POS terminals 1 in association with the identifiers of the POS terminals 1.

The threshold change unit 303 returns the threshold used for fraud detection to the initial threshold value at the start of each transaction including one item registration process and one payment process performed by the customer (or performed by the POS terminal 1 according to operations performed by the customer). In other words, the change of the threshold used for fraud detection for a certain customer is not applied to fraud detection for another customer who will perform an item registration process and a payment process at the POS terminal 1 next time.

The generation unit 304 generates display data in which an identifier of each POS terminal 1 and a threshold used for fraud detection for the POS terminal 1 are associated with each other.

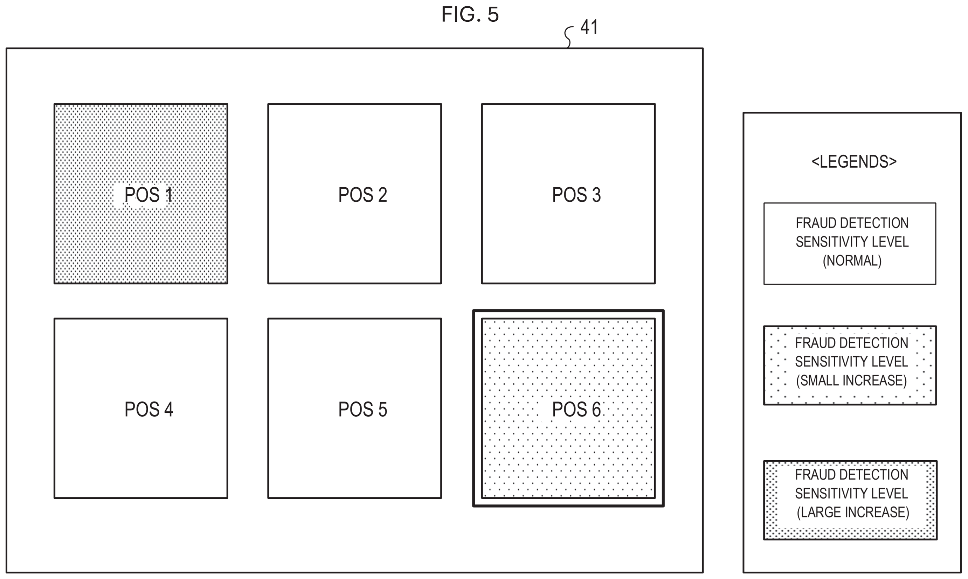

FIG. 5 is a diagram illustrating an example of display data according to the present embodiment. In FIG. 5, for the sake of explanation, it is assumed that the display data is displayed on the display 41 of the attendant PC 4. In the example shown in FIG. 5, the fraud detection system S includes six POS terminals 1. The arrangement of the six POS terminals 1 (POS1 to POS 6) shown in FIG. 5 corresponds to the actual arrangement of the six POS terminals 1 in the store.

In the example illustrated in FIG. 5, three different thresholds are used for fraud detection. The thresholds include an initial threshold value, a first threshold value smaller than the initial threshold value, and a second threshold value smaller than the first threshold value. Assuming that the fraud detection sensitivity level of a POS terminal 1 for which the initial threshold value is set is "normal", the increase in the fraud detection sensitivity level of a POS terminal 1 for which the first threshold value is set is "small", and the increase in the fraud detection sensitivity level of a POS terminal 1 for which the second threshold value is set is "large".

The display data displays the thresholds set for POS terminals 1 installed in the store, in other words, the fraud detection sensitivity levels of the POS terminals 1, in a visually distinguishable manner. In the example shown in FIG. 5, the display data displays six POS terminals 1 in different colors corresponding to the thresholds set for the POS terminals 1. In the example illustrated in FIG. 5, the initial threshold value is set for POS 2 to POS 5, the first threshold value is set for POS 6, and the second threshold is set for POS 1.

In FIG. 5, the legends indicating the thresholds set for the POS terminals 1 are not included in the display data. However, the legends may also be included in the display data. When the legends are included in the display data, the legends are also displayed on the display 41 of the attendant PC 4. As described above, a store clerk using the attendant PC 4 may select a POS terminal 1 on the screen that is displayed on the display 41 and shows the thresholds set for the POS terminals 1 and perform an operation of changing the threshold set for the selected POS terminal 1. In the example shown in FIG. 5, POS 6 is selected by the user.

The configuration of the display data is not limited to the example illustrated in FIG. 5. As another example, the display data may be a list of the identifiers of POS terminals 1 and the thresholds set for the POS terminals 1.

Returning to FIG. 4, when the determination unit 302 determines that the behavior of the customer is fraudulent, the transmitting unit 305 notifies the POS terminal 1 that fraud is detected. The transmitting unit 305 is an example of a notification unit in the present embodiment.

The transmitting unit 305 transmits the display data generated by the generation unit 304 to the attendant PC 4.

Programs executed by the POS terminal 1, the edge device 3, and the attendant PC 4 (which may be collectively referred to as devices) of the present embodiment may be recorded and provided in a computer-readable storage medium, such as a flash memory, a CD-ROM, a flexible disk (FD), a CD-R, or a digital versatile disk (DVD), in an installable format or an executable format. Programs executed by the devices of the present embodiment may be stored in a computer connected to a network, such as the Internet, and downloaded via the network. Programs executed by the devices according to the present embodiment may also be provided or distributed via a network, such as the Internet.

Also, programs executed by each device of the present embodiment may be stored in a memory (for example, the ROM 102) of the device in advance.

Each device according to the present embodiment has a module configuration including the above-described functional units. The processor (CPU 101, GPU, or the like) of each device reads programs from a storage medium, loads the programs into the main memory of the device, and executes the loaded programs to generate the above-described functional units on the main memory. The hardware configurations and the software configurations of the devices are not limited to the above-described examples.

Next, a fraud detection process performed by the edge device 3 of the present embodiment configured as described above will be described.

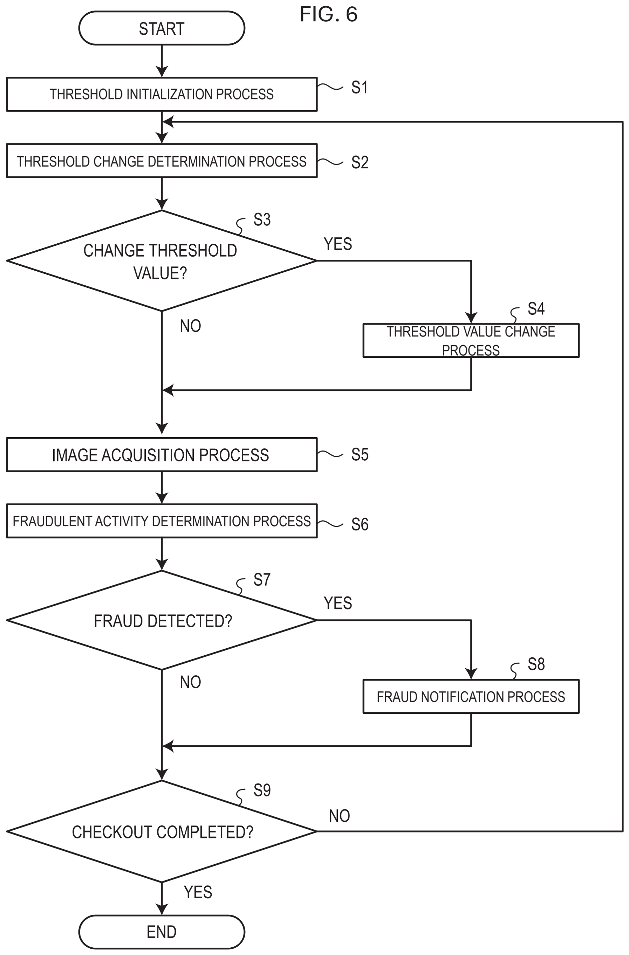

FIG. 6 is a flowchart illustrating an example of a fraud detection process according to the present embodiment. The processor of the edge device 3 may be configured to execute a program stored in a memory to perform the steps in the process described below. The process illustrated in FIG. 6 is started, for example, when the acquisition unit 301 of the edge device 3 acquires a POS event indicating the start of an item registration process from the POS terminal 1. When a plurality of POS terminals 1 are installed in the store, the process shown in FIG. 6 is performed individually for each POS terminal 1. That is, the edge device 3 can perform fraud detection processes for the plurality of POS terminals 1 in parallel.

First, the threshold value unit 303 performs a threshold initialization process for setting the threshold used for fraud detection to the initial threshold value (S1). Even if the threshold value has been changed in the previous transaction, the current fraud detection process can be started with the threshold set to the initial threshold value.

Then, the threshold change unit 303 executes a threshold change determination process for determining whether an instruction to change the threshold for the POS terminal 1 has been acquired from the attendant PC 4 (S2). In this step, the generation unit 304 generates display data in which the identifier of the POS terminal 1 and a change state of the threshold used for fraud detection for the POS terminal 1 are associated with each other. The transmitting unit 305 transmits the generated display data to the attendant PC 4.

When the acquisition unit 301 has acquired the instruction to change the threshold transmitted from the attendant PC 4 (S3 "Yes"), the threshold change unit 303 performs a threshold change process for changing the threshold based on the acquired instruction (S4). In this case, the generation unit 304 changes the display data based on the changed threshold. The transmitting unit 305 transmits the changed display data to the attendant PC 4.

Then, the acquisition unit 301 performs an image acquisition process of acquiring, from the camera 2, image data obtained by capturing the customer (S5). Although not shown in FIG. 6, the image acquisition process may be continuously performed until the payment process is completed.

Then, the determination unit 302 performs a fraudulent activity determination process based on the image data acquired by the acquisition unit 301 (S6). For example, the determination unit 302 detects a customer and behavior of the customer from the image data by using an image recognition technique and increments the fraud score indicating the likelihood of fraud every time specific behavior of the customer is detected. The determination unit 302 compares the total fraud score in one transaction with the currently set threshold.

The determination unit 302 determines that the customer has performed a fraudulent activity when the total fraud score in one transaction exceeds the currently set threshold. When the determination unit 302 detects fraud (S7 "Yes"), the transmitting unit 305 performs a fraud notification process for notifying the POS terminal 1 that fraud has been detected (S8). In other words, the transmitting unit 305 transmits a notification indicating that the customer has performed a fraudulent activity to the POS terminal 1.

The POS terminal 1 that has received the notification displays, for example, a message (or information) for alerting or warning the customer on the display unit 111. In other words, the POS termina 1 alerts or warns the customer upon receipt of the notification. Note that different notification methods may be used depending on the types of fraud detected. For example, the notification transmitted from the edge device 3 to the POS terminal 1 may include information indicating the type of specific behavior of the customer detected by the determination unit 302 of the edge device 3. For example, when the specific behavior of the customer detected by the determination unit 302 includes an act of moving an item from a shopping basket into a plastic bag or a reusable bag without holding the item over the scanner 108, the control unit 100 of the POS terminal 1 may cause the display unit 111 to display, for example, a message "There is an item that has not been scanned?" to alert the customer. Also, when the specific behavior of the customer detected by the determination unit 302 includes an act of the customer moving away from the POS terminal 1 by a specified distance and for a specified time or more before the completion of payment in the payment process, the control unit 100 of the POS terminal 1 may perform notification by, for example, outputting a warning sound from a speaker or by blinking an LED lamp disposed outside the main body of the POS terminal 1.

When the acquisition unit 301 has not acquired the POS event indicating the end of the payment process from the POS terminal 1 (S9 "No"), the determination unit 302 of the edge device 3 returns to step S2. Steps S2 to S9 are repeatedly performed until the POS event indicating the end of the payment process is acquired. The fraud detection process is continued while one transaction continues. Accordingly, the fraud detection process is not terminated even if the acquisition unit 301 acquires a POS event indicating the end of the item registration process and a POS event indicating the start of the payment process.

When the total fraud score in one transaction does not exceed the currently set threshold, the determination unit 302 determines that fraud has not been detected (S7 "No"). In this case, the fraud notification process is not performed, and the process proceeds to step S9.

Then, when the acquisition unit 301 acquires the POS event indicating the end of the payment process from the POS terminal 1 (S9 "Yes"), the determination unit 302 ends the process of this flowchart. In FIG. 6, the threshold initialization process is performed at the beginning of the fraud detection process. However, the threshold change unit 303 may perform the threshold initialization process at the end of the fraud detection process.

As described above, the fraud detection system S of the present embodiment acquires, from the camera 2, image data obtained by capturing a customer performing the item registration process and the payment process at the POS terminal 1 and determines that the customer has performed a fraudulent activity when the fraud score calculated based on the behavior of the customer detected from the image data exceeds the threshold used for fraud detection. Also, the fraud detection system S of the present embodiment can change the threshold used for fraud detection from the initial threshold value during the item registration process or the payment process. In other words, according to the fraud detection system S of the present embodiment, instead of detecting fraud using the same threshold for all customers, fraud can be detected based on criteria that are appropriate for respective customers.

The fraud detection system S of the present embodiment changes the threshold used for fraud detection in response to an instruction input by the user to change the threshold used for a specified POS terminal 1 during the item registration process or the payment process being performed by the customer. Accordingly, with the fraud detection system S of the present embodiment, for example, when a store clerk feels that "the customer is likely to commit fraud" from the demeanor of the customer, the store clerk can increase the fraud detection sensitivity level in real time during the item registration process or the payment process. In this way, by combining a human sense of, for example, a store clerk, such as "the customer is likely to commit fraud" or "the customer is suspicious", with the fraud detection process performed by the edge device 3 using an image recognition technique, it is possible to incorporate tacit knowledge, which is not expressed in words or formalized, or a human sense, which is difficult to be systematized, into fraud detection. Also, with the fraud detection system S of the present embodiment, it is possible to specify a POS terminal 1 for which the threshold is changed. With this configuration, even when a plurality of POS terminals 1 are installed in a store, it is possible to prevent the fraud detection sensitivity levels of other POS terminals 1 from being increased unnecessarily.

The fraud detection system S of the present embodiment returns the threshold used for fraud detection to the initial threshold value at the start of each transaction including an item registration process and a payment process. Therefore, even when the threshold is changed in the previous transaction, the current fraud detection process can be started with the threshold set to the initial threshold value. In other words, a change of the threshold used for fraud detection in the present embodiment is temporary and does not permanently change the fraud detection sensitivity level of the entire store. For example, if a store clerk increases the fraud detection sensitivity level of the entire store for one customer who is likely to commit fraud or looks suspicious, another customer, who will not be determined to be committing fraud according to the normal fraud detection sensitivity level, may also be determined to be committing fraud, which results in false fraud detection. By changing the threshold only for a specified POS terminal 1 and a specific transaction as in the fraud detection system S of the present embodiment, it is possible to accurately limit the target for which the fraud detection sensitivity level is increased.

In the fraud detection system S of the present embodiment, the edge device 3 connected to the POS terminal 1 for communication performs the fraud detection process. The fraud detection process involves image recognition and thus requires significant processing resources. Performing the fraud detection process with the edge device 3 makes it possible to reduce the processing load of the POS terminal 1 and the attendant PC 4 and makes it possible to perform real-time fraud detection by performing the fraud detection process at high speed.

### (First Variation)

In the above-described embodiment, the user operates the attendant PC 4 to change the threshold used for fraud detection. However, the threshold used for fraud detection may be automatically changed based on a condition, such as the start or end of a specific period, instead of an instruction from the user. In other words, the edge device 3 may be configured to change the threshold for fraud detection from the initial threshold value to a value smaller or greater than the initial threshold value in response to detection of a threshold change event during the item registration process or the payment process, and the threshold change event may be either an instruction from the attendant PC 4 or satisfaction of a condition.

For example, the threshold change unit 303 of the edge device 3 may uniformly change the thresholds used for fraud detection for all POS terminals 1 in a store to a value smaller than the initial threshold value only in a specific time period, such as the evening, during which a large number of customers visit the store. In this case, when the specific time period ends, the threshold change unit 303 returns the threshold used for fraud detection to the initial threshold value. When the threshold used for fraud detection is automatically changed based on the specific time period, the changed threshold is continuously used until the end of the specific time period regardless of the end of each transaction.

Even when the threshold used for fraud detection is automatically changed, if the user inputs an instruction to change the threshold for a specific POS terminal 1, the threshold change unit 303 gives priority to the instruction from the user. When the thresholds used for fraud detection at multiple POS terminals 1 in the store have been uniformly changed to a value smaller than the initial threshold value, the user may specify a POS terminal and change the threshold for the specified POS terminal to an even smaller value or may return the threshold to the initial threshold value. The change of the threshold based on the instruction from the user is reset at the start or end of each transaction by the threshold change unit 303 to the automatically set uniform threshold.

### (Second Variation)

In the above-described embodiment, the threshold change unit 303 of the edge device 3 is capable of changing the threshold used for fraud detection to a value smaller than the initial threshold value when receiving an instruction from the attendant PC 4. Also, the threshold change unit 303 may be capable of changing the threshold to a value greater than the initial threshold value.

That is, the store clerk may operate the attendant PC 4 to lower the fraud detection sensitivity level in the fraud detection process performed by the edge device 3. For example, when a customer performing suspicious behavior is a regular customer and is unlikely to commit fraud, the store clerk may operate the attendant PC 4 to change the threshold for fraud detection for the POS terminal 1 being used by the customer to a value greater than the initial threshold value.

### (Third Variation)

In the above embodiment, the camera 2 disposed near the POS terminal 1 or on the main body of the POS terminal 1 is an example of a sensing device. However, an item scanning camera included in the POS terminal 1 as the scanner 108 may be an example of a sensing device.

### (Fourth Variation)

In the above-described embodiment, the determination unit 302, which is a function implemented by the edge device 3, is an example of a fraudulent activity detection unit. However, the entire edge device 3 may be an example of a fraudulent activity detection unit.

### (Fifth Variation)

In the above-described embodiment, the threshold change unit 303, which is a function implemented by the edge device 3, is an example of a threshold change unit. However, the attendant PC 4 may be an example of a threshold change unit.

### (Sixth Variation)

In the above-described embodiment, the transmitting unit 305, which is a function implemented by the edge device 3, is an example of a notification unit. However, the display unit 111, the speaker, the LED lamp, or the like of the POS terminal 1 may be an example of a notification unit.

The transmitting unit 305 of the edge device 3 may notify the attendant PC 4 that fraud has been detected. In this case, the attendant PC 4 may display information indicating a POS terminal 1 at which fraud is detected, on the display 41 or the like. For example, on the screen indicating thresholds set for respective POS terminals 1 illustrated in FIG. 5, the attendant PC 4 may blink an image representing the POS terminal 1 at which fraud has been detected. Blinking the image is an example of notification.

### (Seventh Variation)

In the above-described embodiment, the generation unit 304, which is a function implemented by the edge device 3, generates display data. Alternatively, the attendant PC 4 may generate display data. In this case, the attendant PC 4 is an example of a generation unit. Also, in this case, the generation unit 304 of the edge device 3 generates threshold setting status data in which identifiers of POS terminals 1 are associated with the thresholds set for the POS terminals 1, and the transmitting unit 305 transmits the threshold setting status data to the attendant PC 4. The attendant PC 4 generates display data to be displayed on the display 41 based on the threshold setting status data.

### (Eighth Variation)

The POS terminal 1 or the attendant PC 4 may include the functions of the edge device 3 in the above-described embodiment. In this case, the POS terminal 1 or the attendant PC 4 is an example of an image acquisition unit, a fraudulent activity detection unit, a threshold change unit, and a notification unit.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims and their equivalents are intended to cover such forms or modifications as would fall within the scope of the disclosure.

## Claims

1. A system comprising:
a point of sale (POS) terminal, a sensing device, an information terminal, and a management terminal that are connected to each other for communication, wherein
the sensing device is configured to capture image data of a customer performing an item registration process and a payment process in a transaction at the POS terminal; and
the information terminal is configured to perform a fraud detection process that includes
acquiring the image data from the sensing device,
changing a threshold for fraud detection from an initial threshold value to a value smaller or greater than the initial threshold value in response to detection of a threshold change event during the item registration process or the payment process,
detecting specific behavior of the customer from the image data by using an image recognition technique,
incrementing a fraud score each time the specific behavior of the customer is detected,
determining that the customer has performed a fraudulent activity when the fraud score exceeds the threshold, and
transmitting a notification indicating that the customer has performed the fraudulent activity to at least one of the POS terminal and the management terminal.

2. The system according to claim 1, wherein
the threshold change event is an instruction from the management terminal to change the threshold for the POS terminal; and
the information terminal is configured to change the threshold based on the instruction.

3. The system according to claim 1, wherein
the threshold change event is satisfaction of a condition; and
the information terminal is configured to automatically change the threshold when the condition is satisfied.

4. The system according to any one of claims 1 to 3, wherein
the information terminal is configured to return the changed threshold to the initial threshold value at a start or an end of the transaction.

5. The system according to any one of claims 1 to 4, wherein
the information terminal is configured to
generate display data including an identifier of the POS terminal and the threshold used for the fraud detection process for the POS terminal; and
transmit the display data to the management terminal.

6. The system according to any one of claims 1 to 5, wherein
the POS terminal is configured to alert the customer upon receipt of the notification.

7. The system according to any one of claims 1 to 6, wherein
the management terminal is configured to display information indicating the POS terminal at which the fraudulent activity has been detected upon receipt of the notification.

8. The system according to any one of claims 1 to 7, wherein
the POS terminal is configured to transmit a POS event indicating a start or an end of the item registration process or a start or an end of the payment process to the information terminal; and
the information terminal is configured to start the fraud detection process upon receipt of the POS event indicating the start of the item registration process.

9. The system according to claim 8, wherein
the information terminal is configured to end the fraud detection process upon receipt of the POS event indicating the end of the payment process.

10. The system according to any one of claims 1 to 9, wherein the information terminal is configured to increment the fraud score by an amount predetermined for each type of the specific behavior.

11. A method performed by a system including a point of sale (POS) terminal, a sensing device, an information terminal, and a management terminal that are connected to each other for communication, the method comprising:
capturing, by the sensing device, image data of a customer performing an item registration process and a payment process in a transaction at the POS terminal; and
performing, by the information terminal, a fraud detection process that includes
acquiring the image data from the sensing device,
changing a threshold for fraud detection from an initial threshold value to a value smaller or greater than the initial threshold value in response to detection of a threshold change event during the item registration process or the payment process,
detecting specific behavior of the customer from the image data by using an image recognition technique,
incrementing a fraud score each time the specific behavior of the customer is detected,
determining that the customer has performed a fraudulent activity when the fraud score exceeds the threshold, and
transmitting a notification indicating that the customer has performed the fraudulent activity to at least one of the POS terminal and the management terminal.

12. The method according to claim 11, wherein
the threshold change event is an instruction from the management terminal to change the threshold for the POS terminal; and
the threshold is changed based on the instruction.

13. The method according to claim 11, wherein
the threshold change event is satisfaction of a condition; and
the threshold is automatically changed when the condition is satisfied.

14. The method according to any one of claims 11 to 13, further comprising:
returning, by the information terminal, the changed threshold to the initial threshold value at a start or an end of the transaction.

15. A non-transitory computer readable storage medium storing a program for causing a processor of an information terminal to perform a process including:
acquiring image data obtained by a sensing device by capturing a customer performing an item registration process and a payment process in a transaction at a POS terminal;
changing a threshold for fraud detection from an initial threshold value to a value smaller or greater than the initial threshold value in response to detection of a threshold change event during the item registration process or the payment process;
detecting specific behavior of the customer from the image data by using an image recognition technique;
incrementing a fraud score each time the specific behavior of the customer is detected;
determining that the customer has performed a fraudulent activity when the fraud score exceeds the threshold; and
transmitting a notification indicating that the customer has performed the fraudulent activity to at least one of the POS terminal and a management terminal that manages the POS terminal.
